# FASCICULE DE BREVET EUROPEEN

(11) **EP 2 988 243 B1**
(45) Date de publication et mention de la délivrance du brevet: **05.10.2016**
(21) Numéro de dépôt: 15159616.0
(22) Date de dépôt: 18.03.2015
(51) Int. Cl.: G06F 21/57, G06F 12/14, H04L 9/32

(54) **DISPOSITIF ET PROCÉDÉ POUR ASSURER DES SERVICES DE MODULE DE PLATEFORME SÉCURISÉE**
Gerät und Verfahren um Dienste eines sicheren Plattformmoduls sicherzustellen
Device and method to insure secure platform module services

(30) Priorité: 18.08.2014 FR 1457855
(43) Date de publication de la demande: 24.02.2016
(73) Titulaire: PROTON WORLD INTERNATIONAL N.V., 1831 Diegem (BE)
(72) Inventeur: Collart, Olivier, 1495 SART-DAMES-AVELINES (BE); Moriau, Bénédicte, 1495 SART-DAMES-AVELINES (BE)
(74) Mandataire: Thibon, Laurent

(56) Documents cités:
- EP-A2- 2 063 358
- JAN-ERIK EKBERG ET AL: "Trust in a small package", PROCEEDINGS OF THE 2009 ACM WORKSHOP ON SCALABLE TRUSTED COMPUTING, STC '09, 1 janvier 2009 (2009-01-01), page 9, XP055167700, New York, New York, USA DOI: 10.1145/1655108.1655111 ISBN: 978-1-60-558788-2

## Description

### Domaine

La présente description concerne le domaine des procédés et dispositifs pour assurer des services de module de plateforme sécurisée (TPM), sans utiliser un dispositif TPM dédié.

### Exposé de l'art antérieur

Afin d'assurer l'authenticité et la sécurité de configurations matérielles et logicielles, on a déjà proposé d'utiliser un module de plateforme sécurisée (TPM). Un TPM est un dispositif cryptographique destiné à permettre un fonctionnement informatique sécurisé. Une exigence essentielle d'un environnement informatique sécurisé est d'assurer l'intégrité de la séquence d'amorçage. Pour réaliser cela, le TPM forme une "base de confiance". En particulier, à la mise sous tension d'un dispositif informatique, la séquence d'amorçage démarre à partir d'un état de confiance, et cette confiance est étendue jusqu'à ce que le système d'exploitation ait complètement démarré et que les applications soient en cours d'exécution. L'intégrité est assurée à chaque étape en utilisant un ou plusieurs registres de configuration de plateforme (PCR) du TPM pour mémoriser de façon sécurisée des mesures d'amorçage. Le contenu des PCR peut ensuite être signé de façon cryptographique par le TPM et être fourni à une application ou à un tiers distant de sorte que l'intégrité de la séquence d'amorçage puisse être vérifiée.

Des modules de plateforme sécurisée peuvent être intégrés dans une grande gamme de dispositifs informatiques électroniques, comme des smartphones, des tablettes et des ordinateurs portables. Ils sont en général mis en oeuvre sous forme de dispositifs matériels couplés au processeur principal du dispositif électronique.

Toutefois, en raison de limitations dans la surface disponible sur la puce et dans l'alimentation, pour de nombreuses applications comme des smartphones et autres dispositifs portables, on a besoin d'une solution pour assurer des services TPM sans utiliser un dispositif TPM dédié. Il y a toutefois des difficultés techniques pour obtenir un tel système tout en assurant une sécurité élevée et des temps de réponses rapides.

JAN-ERIK EKBERG ET AL: "Trust in a small package",PROCEEDINGS OF THE 2009 ACM WORKSHOP ON SCALABLE TRUSTED COMPUTING, STC '09, 1 janvier 2009 (2009-01-01), page 9, XP055167700 divulgue un circuit comprenant un premier dispositif de traitement comprenant un ou plusieurs premiers registres de configuration de plateforme mémorisant une ou plusieurs valeurs de données sur la base de mesures d'amorçage concernant une séquence d'amorçage mise en oeuvre par le premier dispositif de traitement. EP 2 063 358 A2 montre, outre l'exécution d'un MTM dans un environnement d'exécution sécurisé, la présence d'un deuxième MTM dans une carte SIM.

### Résumé

Un objet de modes de réalisation de la présente description est de résoudre au moins partiellement un ou plusieurs besoins de l'art antérieur.

Selon un aspect, on prévoit un circuit comprenant : un premier dispositif de traitement comprenant un ou plusieurs premiers registres de configuration de plateforme mémorisant une ou plusieurs valeurs de données sur la base de mesures d'amorçage concernant une séquence d'amorçage mise en oeuvre par le premier dispositif de traitement ; et un élément sécurisé comprenant un deuxième dispositif de traitement et un ou plusieurs deuxièmes registres de configuration de plateforme, les premiers et deuxièmes registres de configuration de plateforme étant couplés entre eux par une interface de communication adaptée à copier lesdites une ou plusieurs valeurs de données à partir desdits un ou plusieurs premiers registres de configuration de plateforme vers lesdits un ou plusieurs deuxièmes registres de configuration de plateforme.

Selon un mode de réalisation, l'élément sécurisé est en outre adapté à mettre en oeuvre au moins une fonction cryptographique pour l'authentification d'un utilisateur du circuit.

Selon un mode de réalisation, le premier dispositif de traitement comprend un environnement d'exécution sécurisé dans lequel lesdits un ou plusieurs premiers registres de configuration de plateforme sont mémorisés.

Selon un mode de réalisation, le circuit comprend en outre une mémoire mémorisant une ou plusieurs premières applications logicielles adaptées à vérifier l'intégrité de la séquence d'amorçage sur la base desdites une ou plusieurs valeurs de données.

Selon un mode de réalisation, l'élément sécurisé comprend en outre une mémoire mémorisant une ou plusieurs deuxièmes applications logicielles pour faciliter la transmission desdites une ou plusieurs mesures d'amorçage vers lesdites une ou plusieurs premières applications logicielles.

Selon un mode de réalisation, le circuit comprend en outre un ou plusieurs pilotes pour faciliter la transmission desdites une ou plusieurs mesures d'amorçage vers lesdites une ou plusieurs premières applications logicielles.

Selon un mode de réalisation, l'élément sécurisé est adapté à signer de façon cryptographique lesdites une ou plusieurs valeurs de données et à fournir les valeurs de données signées de façon cryptographique à un élément demandeur.

Selon un mode de réalisation, l'élément sécurisé comprend une mémoire mémorisant une troisième application logicielle exécutable par le deuxième dispositif de traitement pour signer de façon cryptographique lesdites une ou plusieurs valeurs de données.

Selon un mode de réalisation, le circuit est adapté à autoriser ou refuser une ou plusieurs transactions sur la base desdites une ou plusieurs valeurs de données.

Selon un autre aspect, on prévoit un smartphone comprenant le circuit susmentionné.

Selon un autre aspect, on prévoit un procédé de vérification de l'intégrité d'une séquence d'amorçage comprenant : mettre en oeuvre une séquence d'amorçage par un premier dispositif de traitement ; mémoriser, dans un ou plusieurs premiers registres de configuration de plateforme du premier dispositif de traitement, une ou plusieurs valeurs de données sur la base de mesures d'amorçage concernant la séquence d'amorçage ; transférer une ou plusieurs valeurs de données à partir desdits un ou plusieurs premiers registres de configuration de plateforme vers un ou plusieurs deuxièmes registres de configuration de plateforme d'un élément sécurisé comportant un deuxième dispositif de traitement, les premiers et deuxièmes registres de configuration de plateforme étant couplés entre eux par l'intermédiaire d'une interface de communication.

Selon un mode de réalisation, le procédé comprend en outre : demander, par une première application logicielle, lesdites une ou plusieurs valeurs de données ; signer de façon cryptographique lesdites une ou plusieurs valeurs de données par l'élément sécurisé ; et fournir, par l'élément sécurisé, lesdites une ou plusieurs valeurs de données signées de façon cryptographique à la première application logicielle.

### Brève description des dessins

Les caractéristiques et avantages susmentionnés, et d'autres, apparaîtront clairement avec la description détaillée suivante de modes de réalisation, donnés à titre d'illustration et non de limitation, en faisant référence aux dessins joints dans lesquels :
la figure 1 illustre schématiquement des services assurés par un TPM selon un exemple de réalisation ;
la figure 2 illustre schématiquement une carte de circuit imprimé d'un dispositif informatique selon un exemple de réalisation ;
la figure 3 illustre schématiquement une portion d'un dispositif informatique pour assurer des services TPM selon un exemple de réalisation de la présente description ; et
la figure 4 est un organigramme illustrant des opérations dans un procédé de vérification de l'intégrité d'une séquence d'amorçage selon un exemple de réalisation de la présente description.

### Description détaillée

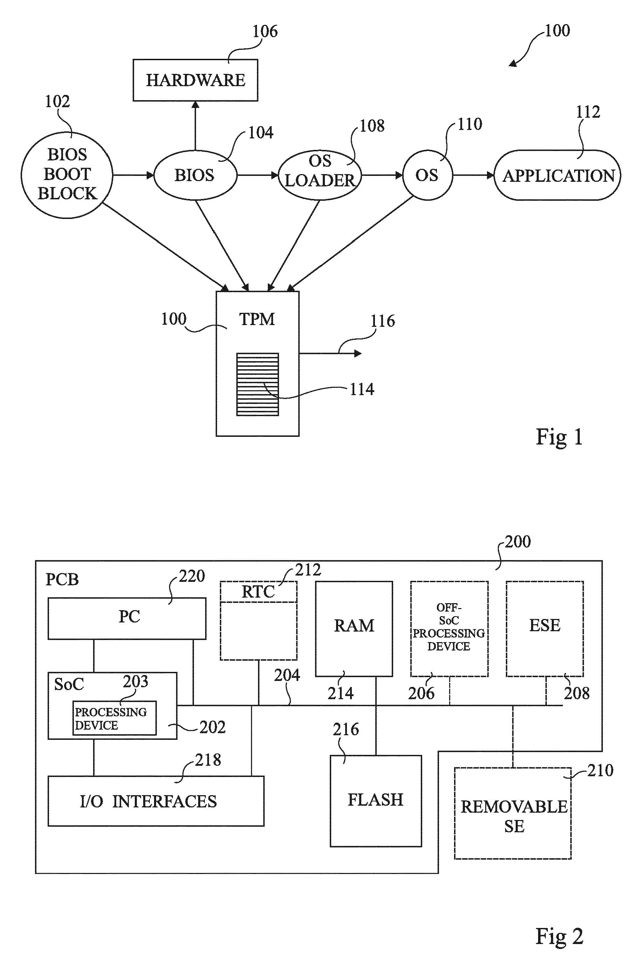

La figure 1 représente schématiquement un système TPM 100 mettant en oeuvre un processus de vérification d'intégrité de plateforme assuré par un module de plateforme sécurisée (TPM, de l'anglais Trusted Platform Module) mis en oeuvre dans cet exemple par un dispositif cryptographique dédié 100.

Un bloc d'amorçage de BIOS (système d'entrées/sorties de base) (BIOS BOOT BLOCK) 102 comprend par exemple une mémoire non volatile comme une ROM, et fournit une base de confiance pour une vérification d'intégrité. Comme cela est représenté par une flèche entre le bloc d'amorçage de BIOS 102 et le TPM 100, une ou plusieurs mesures d'amorçage correspondant au bloc d'amorçage de BIOS 102 peuvent être transmises au TPM 100.

Des noeuds 104, 108, 110 et 112 en figure 1 représentent du logiciel qui est chargé dans une mémoire volatile, comme une RAM (mémoire à accès aléatoire), pendant la séquence d'amorçage. Le bloc d'amorçage de BIOS 102 provoque par exemple le chargement d'un BIOS 104 dans une mémoire volatile. Comme cela est représenté par une flèche entre le BIOS 104 et le TPM 100, une ou plusieurs mesures d'amorçage associées au chargement du BIOS 102 peuvent être transmises au TPM 100 par le BIOS 104. En outre, un ou plusieurs composants matériels auxiliaires (HARDWARE) 106 inclus dans la plateforme, comme une carte graphique, un contrôleur gérant la connectivité de la plateforme ou un coprocesseur cryptographique, peuvent aussi être amorcés en réponse au chargement du BIOS 104. Le microcode s'exécutant sur ces composants peut aussi être mesuré et transmis au TPM.

Un chargeur de système d'exploitation (OS LOADER) 108 est ensuite par exemple chargé à partir de la mémoire non volatile dans la mémoire volatile, et ici encore une ou plusieurs mesures d'amorçage peuvent être transmises au TPM 100.

Un système d'exploitation (OS) 110 est ensuite par exemple chargé à partir de la mémoire non volatile dans la mémoire volatile, et ici encore une ou plusieurs mesures d'amorçage peuvent être transmises au TPM 100.

Une ou plusieurs applications logicielles (APPLICATION) 112 sont ensuite par exemple chargées à partir de la mémoire non volatile, et ici encore une ou plusieurs mesures d'amorçage peuvent être transmises au TPM 100.

Le module de plateforme sécurisée 100 comprend une banque 114 d'un ou plusieurs registres de configuration de plateforme (PCR), et les mesures d'amorçage générées pendant la séquence d'amorçage sont mémorisées dans cette banque de registres. En général, après une réinitialisation, la banque PCR 114 contient une valeur nulle, et les mesures d'amorçage peuvent par exemple seulement être mémorisées dans la banque PCR 114 en utilisant une instruction "d'extension" pour étendre le contenu de la banque PCR. A la fin de la séquence d'amorçage, lesdits uns ou plusieurs PCR 114 contiennent chacun par exemple un condensé des mesures chaînées du logiciel amorcé. Dans un exemple, chaque mesure transmise à un PCR spécifique met à jour la valeur du PCR avec la formule PCR_NEW=H(PCR_OLD+M), où PCR_NEW est la valeur PCR mise à jour, PCR_OLD est la valeur PCR précédente, M est la mesure, et H() est une fonction d'assimilation. Ainsi, la valeur PCR finale à la fin du processus d'amorçage est un condensé de toutes les mesures transmises au TPM. Cette valeur PCR finale peut seulement être obtenue en transmettant au PCR les mêmes mesures spécifiques dans le même ordre.

Le TPM 100 comprend par exemple des fonctions cryptographiques qui permettent de signer de façon cryptographique les mesures stockées dans la banque PCR 114. Comme cela est représenté par une flèche 116, les mesures signées de façon cryptographique peuvent être fournies à un ou plusieurs tiers demandeurs, comme le système d'exploitation 110 et/ou l'une des applications 112, afin de vérifier l'intégrité de la séquence d'amorçage.

La figure 2 illustre schématiquement une carte de circuit imprimé (PCB) 200 dans laquelle des services TPM (de module de plateforme sécurisée) peuvent être assurés.

Le PCB 200 comprend un système sur puce (SoC) 202, qui comprend un dispositif de traitement (PROCESSING DEVICE) 203. Comme on va le décrire plus en détail ci-après, le dispositif de traitement 203 comprend par exemple un environnement d'exécution sécurisé permettant le traitement et la mémorisation de données sensibles. Ici, le terme "données sensibles" est utilisé pour désigner toute donnée qui doit rester inaccessible aux tiers non autorisés.

Le SoC 202 est par exemple couplé à un bus 204 par l'intermédiaire duquel le dispositif de traitement 203 du SoC 202 peut communiquer avec d'autres blocs matériels optionnels. Dans l'exemple de la figure 2, le PCB 200 comprend en outre un dispositif de traitement SoC hors puce (OFF-SoC PROCESSING DEVICE) 206, couplé au bus 204, qui est par exemple un coprocesseur cryptographique. Le dispositif 206 est par exemple adapté à exécuter des fonctions qui ne sont pas supportées par le SoC, comme des fonctions cryptographiques. Comme avec le dispositif de traitement 203 du SoC 202, le dispositif de traitement 206 peut inclure un environnement d'exécution sécurisé permettant le traitement et la mémorisation de données sensibles. Toutefois, comme cela apparaîtra clairement dans la description qui suit, le dispositif 206 peut avantageusement être omis grâce aux nouvelles fonctions du dispositif de traitement 203 et de l'élément sécurisé 208 et/ou 210.

Le PCB 200 comprend aussi par exemple un élément sécurisé intégré (ESE) 208 et/ou un élément sécurisé amovible (REMOVABLE SE) 210, chacun étant couplé au bus 204. Comme cela est connu de l'homme de l'art, un élément sécurisé intégré ou amovible assure des fonctions cryptographiques pour authentifier un utilisateur du circuit et/ou pour réaliser d'autres opérations comme la génération de signature.

Une horloge temps réel (RTC) 212 est aussi couplée au bus 204 et peut fournir des informations temporelles à des services de plateforme.

Le PCB 200 comprend aussi par exemple une mémoire volatile 214, comme une RAM (mémoire à accès aléatoire), et/ou une mémoire non volatile 216, comme une mémoire FLASH 216, couplée au bus 204. Le PCB 200 peut aussi comprendre une ou plusieurs interfaces d'entrée/sortie (I/O INTERFACES) 218 couplées au SoC 202 et au bus 204, qui par exemple comprennent des pilotes vidéo, des claviers, des écrans tactiles, etc. Le PCB 200 peut en outre comprendre un circuit de commande d'alimentation (PC) 220, couplé au SoC 202 et au bus 204, qui contrôle la coupure de l'alimentation et l'établissement de l'alimentation du SoC 202 et/ou d'un ou plusieurs autres dispositifs se trouvant sur le PCB 200.

Comme on va le décrire plus en détail ci-après, plutôt que d'avoir un dispositif TPM dédié, les services TPM assurés dans le système 100 de la figure 1 sont partagés entre le dispositif de traitement 203 et l'un ou les deux éléments sécurisés 208 et 210.

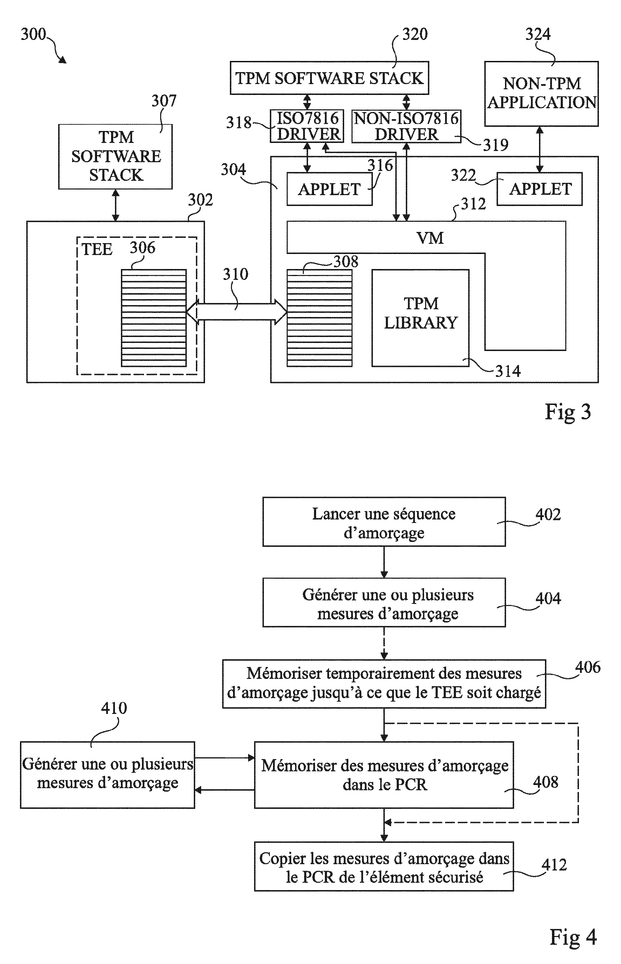

La figure 3 illustre schématiquement une portion 300 d'un dispositif informatique dans lequel les fonctions d'un TPM sont mises en oeuvre par un dispositif de traitement principal 302 et un élément sécurisé 304 du dispositif électronique. En particulier, la mise en oeuvre de la figure 3 permet par exemple au moins la vérification de l'intégrité de la séquence d'amorçage. Le dispositif de traitement principal 302 est par exemple le dispositif de traitement mettant en oeuvre la séquence d'amorçage du dispositif, comme le dispositif de traitement 203 du SoC 202 en figure 2. L'élément sécurisé 304 pourrait être un élément sécurisé intégré, comme l'élément 208 de la figure 2, ou un élément sécurisé amovible, comme l'élément 210 de la figure 2.

Le dispositif de traitement 302 comprend un ou plusieurs registres de configuration de plateforme dans une banque 306, qui sont par exemple maintenus dans un environnement d'exécution sécurisé (TEE) du dispositif de traitement 302. Comme cela est connu de l'homme de l'art, un TEE comprend du matériel et du logiciel pour isoler certaines données et certaines opérations d'autres parties du dispositif afin d'assurer la sécurité contre des attaques logicielles.

La fonctionnalité TPM du dispositif de traitement 302, qui va être décrite plus en détail ci-après, est par exemple contrôlée par une pile logicielle TPM (TPM SOFTWARE STACK) 307, qui fournit aussi des services TPM à des applications s'exécutant sur la plateforme.

La banque PCR 306 est par exemple adaptée à recevoir des mesures d'amorçage générées pendant la séquence d'amorçage du dispositif de traitement 302. Ces mesures correspondent par exemple à des mesures de code faites pendant l'amorçage de la plateforme. Les mesures d'amorçage concernent par exemple le chargement d'un BIOS, d'un système d'exploitation, et/ou d'une ou plusieurs applications. Dans certains modes de réalisation, des mesures d'amorçage peuvent aussi être générées en relation avec le chargement d'un ou plusieurs pilotes de matériel, ajoutant par cela de la sécurité au fonctionnement d'un tel matériel. Par exemple, les mesures d'amorçage peuvent concerner le chargement d'un pilote d'affichage, d'un pilote de clavier et/ou d'un pilote de modem, afin d'ajouter de la sécurité à l'affichage de données, pour protéger des données introduites par un utilisateur, et/ou pour protéger des données de transaction.

L'élément sécurisé 304 comprend une ou plusieurs autres banques PCR 308. Une connexion 310, authentifiée en utilisant des protections physiques ou logiques, relie le dispositif de traitement 302 et l'élément sécurisé 304, et en particulier couple la banque PCR 306 à la banque PCR 308 pour permettre à des données provenant de la banque PCR 306 d'être transférées vers la banque PCR 308. Dans certains modes de réalisation, un transfert est réalisé à chaque fois que la banque PCR 306 est étendue, de sorte que la banque PCR 308 est constamment maintenue à jour. En variante, la banque PCR 308 est par exemple synchronisée seulement une fois à la fin du processus d'amorçage de la plateforme, une fois que la banque PCR 306 a reçu toutes les mesures faites par le dispositif de traitement 302. En effet, dans certains cas, l'élément sécurisé 304 peut ne pas être disponible aussi rapidement que le dispositif de traitement 302 pendant le processus d'amorçage.

L'élément sécurisé 304 comprend par exemple divers blocs fonctionnels représentés en figure 3, qui sont par exemple mis en oeuvre par du logiciel exécuté par un dispositif de traitement de l'élément sécurisé (non illustré en figure 3). En particulier, l'élément sécurisé comprend une machine virtuelle (VM) 312 fournissant des services à des applications (applets). Dans l'exemple de la figure 3, l'architecture logicielle de l'élément sécurisé comprend par exemple la machine virtuelle 312 afin de permettre à des fournisseurs d'applications indépendants de charger des applets, la virtualisation assurant un pare-feu entre les applets et évitant des conflits entre les applets. L'élément sécurisé 304 comprend aussi une librairie TPM (TPM LIBRARY) 314, appelée par la machine virtuelle, et qui comprend du code pour contrôler des données TPM et fournir des services TPM à la machine virtuelle 312. Les données TPM comprennent des clés de chiffrement signant de façon cryptographique le contenu de la banque PCR 308, et/ou d'autres données pertinentes.

Les applets de l'élément sécurisé 304 supportent des communications entre l'élément sécurisé 304 et un ou plusieurs autres éléments qui peuvent demander une vérification de l'intégrité de la séquence d'amorçage mise en oeuvre par le dispositif de traitement 302. Par exemple, l'élément sécurisé 304 comprend une applet Carte Java (JC) 316 supportant un protocole de communication ISO 7816 permettant des communications par l'intermédiaire d'un pilote ISO 7816 (ISO7816 DRIVER) 318 avec une pile logicielle TPM (TPM SOFTWARE STACK) 320 qui peut être la même que la pile logicielle 307. Les commandes TPM standards envoyées par la pile logicielle TPM au TPM sont emballées par le pilote et déballées par l'applet Carte Java 316. Une fois que les commandes sont déballées, l'applet Carte Java 316 peut traiter les commandes TPM par l'intermédiaire du service de Machine Virtuelle par la librairie TPM 314.

Comme cela est représenté par une flèche directement entre le pilote 318 et la librairie TPM 314, la librairie TPM 314 peut en outre ou à la place fournir des services TPM à la pile logicielle 320 par l'intermédiaire du pilote 318 sans utiliser la couche de machine virtuelle (applet 316).

En outre, un pilote non-ISO 7816 (NON-ISO7816 DRIVER) 319 peut être prévu entre la librairie TPM 314 et la pile logicielle TPM 320 en plus ou à la place du pilote 318. Aucune applet n'est utilisée dans cet exemple entre la librairie TPM 314 et le pilote 319. La configuration matérielle utilise par exemple un bus SPI (interface périphérique série) ou un bus SWP (protocole à un seul fil) entre la librairie TPM 314 et le pilote 318 et/ou le pilote 319, le bus ou les bus étant par exemple partagés avec le dispositif de traitement 302.

En plus ou à la place, l'élément sécurisé 304 peut mémoriser une applet Carte Java (APPLET) 322 permettant des communications avec une application 324 en utilisant des commandes TPM non standard. Par exemple, la vérification d'intégrité assurée par les données de la banque PCR 308 pourrait être utilisée pour une gamme d'applications, par exemple en tant que partie d'un processus d'authentification. Dans un mode de réalisation, une signature numérique est générée par l'élément sécurisé 304 pour authentifier une transaction financière, comme le montant, la devise et/ou le compte de destination. Une telle signature comprend en plus par exemple des données de la banque PCR 308, et ces données sont vérifiées avant l'autorisation de la transaction.

Le fonctionnement du circuit de la figure 3 va maintenant être décrit plus en détail en faisant référence à l'organigramme de la figure 4.

Dans une première opération 402 de la figure 4, une séquence d'amorçage du dispositif de traitement est lancée. Cela fait suite par exemple à une période de mise hors tension de la portion 300 du dispositif informatique de la figure 3, et la séquence d'amorçage est par exemple lancée automatiquement à la mise sous tension.

Dans une opération suivante 404, une ou plusieurs mesures d'amorçage sont générées pendant la séquence d'amorçage.

Dans certains modes de réalisation, les PCR sont mémorisés dans un TEE qui n'est pas immédiatement disponible au début de la séquence d'amorçage. Dans ce cas, comme cela est représenté dans une opération 406, jusqu'à ce que le TEE ait été chargé, ces mesures d'amorçage peuvent être temporairement mémorisées par le dispositif de traitement 302, et/ou certaines mesures peuvent être transmises directement à l'élément sécurisé 304 pour être stockées dans la banque PCR 308 comme cela est représenté par une flèche en pointillés allant de l'opération 406 vers une opération 412 décrite ci-après.

Dans une opération suivante 408, des mesures d'amorçage sont transmises à la banque PCR 306 du dispositif de traitement 302, par exemple dans un TEE. Les mesures d'amorçage sont mémorisées dans les PCR sous forme de valeurs PCR calculées sur la base des mesures d'amorçage. Comme cela est représenté par un bloc 410, une ou plusieurs autres mesures d'amorçage peuvent être générées pendant la séquence d'amorçage, et ajoutées aux PCR 306 dans l'opération 408.

En outre, périodiquement à chaque fois qu'une nouvelle mesure d'amorçage est transmise aux PCR 306, ou à la fin d'une séquence d'amorçage une fois que toutes les mesures ont été faites, les mesures d'amorçage sont copiées dans la banque PCR 308 de l'élément sécurisé 304. Comme cela a été décrit précédemment, les mesures d'amorçage peuvent ensuite être signées de façon cryptographique et utilisées pendant une vérification de l'intégrité de la séquence d'amorçage.

Bien que cela ne soit pas illustré en figure 4, la vérification de l'intégrité de la séquence d'amorçage implique par exemple la comparaison d'une ou plusieurs mesures d'amorçage à une valeur de référence. Si les mesures d'amorçage concordent avec la valeur de référence, la séquence d'amorçage est par exemple considérée comme valide.

Avantageusement, dans les modes de réalisation décrits ici, les fonctions d'un TPM sont mises en oeuvre en utilisant des PCR à la fois du dispositif de traitement exécutant la séquence d'amorçage et de l'élément sécurisé, et les mesures d'amorçage sont transférées par l'intermédiaire d'une connexion sécurisée entre les deux banques PCR. De cette manière, les PCR du dispositif de traitement peuvent être disponibles très rapidement pendant la séquence d'amorçage, et les PCR de l'élément sécurisé peuvent assurer une interface très sécurisée avec d'autres éléments demandant un accès aux mesures d'amorçage.

Avec la description ainsi faite d'au moins un mode de réalisation illustratif, diverses altérations, modifications et améliorations apparaîtront facilement à l'homme de l'art.

Par exemple, il sera clair pour l'homme de l'art que bien qu'on ait décrit des modes de réalisation dans lesquels le PCR du dispositif de traitement est mémorisé dans un TEE pour assurer une sécurité additionnelle, cette fonctionnalité est optionnelle.

En outre, il sera clair pour l'homme de l'art que les divers éléments décrits en relation avec les divers modes de réalisation pourraient être combinés, dans les variantes de réalisation, selon des combinaisons quelconques.

## Revendications

1. Circuit comprenant :
un premier dispositif de traitement (302) comprenant un ou plusieurs premiers registres de configuration de plateforme (306) mémorisant une ou plusieurs valeurs de données sur la base de mesures d'amorçage concernant une séquence d'amorçage mise en oeuvre par le premier dispositif de traitement ; et
un élément sécurisé (304) comprenant un deuxième dispositif de traitement et un ou plusieurs deuxièmes registres de configuration de plateforme (308), les premiers et deuxièmes registres de configuration de plateforme (306, 308) étant couplés entre eux par une interface de communication (310) adaptée à copier lesdites une ou plusieurs valeurs de données à partir desdits un ou plusieurs premiers registres de configuration de plateforme (306) vers lesdits un ou plusieurs deuxièmes registres de configuration de plateforme (308).

2. Circuit selon la revendication 1, dans lequel l'élément sécurisé (108, 110) est en outre adapté à mettre en oeuvre au moins une fonction cryptographique pour l'authentification d'un utilisateur du circuit.

3. Circuit selon la revendication 1 ou 2, dans lequel le premier dispositif de traitement (302) comprend un environnement d'exécution sécurisé (TEE) dans lequel lesdits un ou plusieurs premiers registres de configuration de plateforme (306) sont mémorisés.

4. Circuit selon l'une quelconque des revendications 1 à 3, comprenant en outre une mémoire (214) mémorisant une ou plusieurs premières applications logicielles (320, 324) adaptées à vérifier l'intégrité de la séquence d'amorçage sur la base desdites une ou plusieurs valeurs de données.

5. Circuit selon la revendication 4, dans lequel l'élément sécurisé (304) comprend en outre une mémoire mémorisant une ou plusieurs deuxièmes applications logicielles (316, 322) pour faciliter la transmission desdites une ou plusieurs mesures d'amorçage vers lesdites une ou plusieurs premières applications logicielles (320, 324).

6. Circuit selon la revendication 4 ou 5, comprenant en outre un ou plusieurs pilotes (318, 319) pour faciliter la transmission desdites une ou plusieurs mesures d'amorçage vers lesdites une ou plusieurs premières applications logicielles (320, 324).

7. Circuit selon l'une quelconque des revendications 1 à 6, dans lequel l'élément sécurisé (304) est adapté à signer de façon cryptographique lesdites une ou plusieurs valeurs de données et à fournir les valeurs de données signées de façon cryptographique à un élément demandeur.

8. Circuit selon la revendication 7, dans lequel l'élément sécurisé (208, 210) comprend une mémoire mémorisant une troisième application logicielle (314) exécutable par le deuxième dispositif de traitement pour signer de façon cryptographique lesdites une ou plusieurs valeurs de données.

9. Circuit selon l'une quelconque des revendications 1 à 8, adapté à autoriser ou refuser une ou plusieurs transactions sur la base desdites une ou plusieurs valeurs de données.

10. Smartphone comprenant le circuit de l'une quelconque des revendications 1 à 9.

11. Procédé de vérification de l'intégrité d'une séquence d'amorçage comprenant :
mettre en oeuvre une séquence d'amorçage par un premier dispositif de traitement (203) ;
mémoriser, dans un ou plusieurs premiers registres de configuration de plateforme (306) du premier dispositif de traitement, une ou plusieurs valeurs de données sur la base de mesures d'amorçage concernant la séquence d'amorçage ;
transférer une ou plusieurs valeurs de données à partir desdits un ou plusieurs premiers registres de configuration de plateforme (306) vers un ou plusieurs deuxièmes registres de configuration de plateforme (308) d'un élément sécurisé (304) comportant un deuxième dispositif de traitement, les premiers et deuxièmes registres de configuration de plateforme étant couplés entre eux par l'intermédiaire d'une interface de communication (310).

12. Procédé selon la revendication 11, comprenant en outre :
demander, par une première application logicielle (320, 324), lesdites une ou plusieurs valeurs de données ;
signer de façon cryptographique lesdites une ou plusieurs valeurs de données par l'élément sécurisé ; et
fournir, par l'élément sécurisé (304), lesdites une ou plusieurs valeurs de données signées de façon cryptographique à la première application logicielle (320, 324).

## Patentansprüche

1. Ein Schaltkreis, der folgendes aufweist:
eine erste Verarbeitungseinrichtung (302), die ein oder mehrere erste Plattformkonfigurationsregister (306) enthält, die ein oder mehrere Datenwerte basierend auf Bootmessungen bezogen auf eine Bootsequenz speichern, die in der ersten Verarbeitungseinrichtung implementiert ist; und
ein Sicherheitselement (304), das eine zweite Verarbeitungseinrichtung und ein oder mehrere zweite Plattformkonfigurationsregister (308) enthält, wobei die ersten und zweiten Plattformkonfigurationsregister (306, 308) über ein Kommunikationsinterface (310) miteinander gekoppelt sind, das angepasst ist zum Kopieren der ein oder mehren Datenwerte von den ein oder mehreren ersten Plattformkonfigurationsregistern (306) in die ein oder mehreren zweiten Plattformkonfigurationsregister (308).

2. Schaltkreis nach Anspruch 1, wobei das Sicherheitselement (108, 110) ferner angepasst ist zum Implementieren mindestens einer kryptografischen Funktion zur Authentifikation eines Nutzers des Schaltkreises.

3. Schaltkreis nach Anspruch 1 oder 2, wobei die erste Verarbeitungseinrichtung (302) eine vertrauenswürdige Ausführungsumgebung, auch Trusted Execution Environment (TEE), aufweist, in der die ein oder mehreren ersten Platformkonfigurationsregister (306) gespeichert sind.

4. Schaltkreis nach einem der Ansprüche 1 bis 3, der ferner einen Speicher (214) aufweist, der eine oder mehrerer Softwareanwendungen (320, 324) speichert, die zum Überprüfen der Integrität der Bootsequenz basierend auf den einen oder mehreren Datenwerten angepasst sind.

5. Schaltkreis nach Anspruch 4, wobei das Sicherheitselement (304) ferner einen Speicher aufweist, der eine oder mehrerer zweiter Softwareanwendungen (316, 322) speichert, und zwar zum Ermöglichen der Übertragung der einen oder mehreren Bootmessungen an die eine oder die mehreren ersten Softwareanwendungen (320, 324).

6. Schaltkreis nach Anspruch 4 oder 5, der ferner ein oder mehrere Treiber (318, 319) zum Ermöglichen der Übertragung der einen oder mehreren Bootmessungen an die eine oder die mehreren ersten Softwareanwendungen (320, 324) aufweist.

7. Schaltkreis nach einem der Ansprüche 1 bis 6, wobei das Sicherheitselement (304) angepasst ist zum kryptografischen Unterzeichnen der einen oder mehreren Datenwerte und zum Bereitstellen der kryptografisch unterzeichneten Datenwerte an ein anforderndes Element.

8. Schaltkreis nach Anspruch 7, wobei das Sicherheitselement (208, 210) einen Speicher aufweist, der einer dritten Softwareanwendung (314) speichert, die auf der zweiten Verarbeitungseinrichtung zum kryptografischen Unterzeichnen der einen oder mehreren Datenwerte ausführbar ist.

9. Schaltkreis nach einem der Ansprüche 1 bis 8, der angepasst ist zum Autorisieren oder Ablehnen von einen oder mehreren Transaktionen basierend auf den einen oder mehreren Datenwerten.

10. Ein Smartphone, das den Schaltkreis nach einem der Ansprüchen 1 bis 9 aufweist.

11. Ein Verfahren zum Überprüfen der Integrität einer Bootsequenz, das folgendes aufweist:
Implementieren einer Bootsequenz durch eine erste Verarbeitungseinrichtung (203);
Speichern, in einem oder mehreren ersten Plattformkonfigurationsregister (306) der ersten Verarbeitungseinrichtung von einem oder mehreren Datenwerten basierend auf Bootmessungen bezogen auf die Bootsequenz;
Übertragen von einem oder mehreren Datenwerten von den einen oder mehreren ersten Plattformkonfigurationsregistern (306) an ein oder mehrerer zweite Plattformkonfigurationsregister (308) eines Sicherheitselements (304), das eine zweite Verarbeitungseinrichtung aufweist, wobei die ersten und zweiten Plattformkonfigurationsregister über ein Kommunikationsinterface (310) miteinander gekoppelt sind.

12. Verfahren nach Anspruch 11, das ferner Folgendes aufweist:
Anfordern, durch eine erste Softwareanwendung (320, 324), der ersten einen oder mehreren Datenwerte;
kryptografisches Unterzeichnen der einen oder mehreren Datenwerte durch das Sicherheitselement; und
Bereitstellen, durch das Sicherheitselement (304), der einen oder mehreren kryptographisch unterzeichneten Datenwerte an die erste Softwareanwendung (320, 324).

## Claims

1. A circuit comprising:
a first processing device (302) including one or more first platform configuration registers (306) storing one or more data values based on boot measurements relating to a boot sequence implemented by the first processing device; and
a secure element (304) including a second processing device and one or more second platform configuration registers (308), the first and second platform configuration registers (306, 308) being coupled together via a communications interface (310) adapted to copy the one or more data values from the one or more first platform configuration registers (306) to the one or more second platform configuration registers (308).

2. The circuit of claim 1, wherein the secure element (108, 110) is further adapted to implement at least one cryptographic function for authentication of a user of the circuit.

3. The circuit of claim 1 or 2, wherein the first processing device (302) comprises a trusted execution environment (TEE) in which the one or more first platform configuration registers (306) are stored.

4. The circuit of any of claims 1 to 3, further comprising a memory (214) storing one or more first software applications (320, 324) adapted to verify the integrity of the boot sequence based on the one or more data values.

5. The circuit of claim 4, wherein the secure element (304) further comprises a memory storing one or more second software applications (316, 322) for facilitating the transmission of the one or more boot measurements to the one or more first software applications (320, 324).

6. The circuit of claim 4 or 5, further comprising one or more drivers (318, 319) for facilitating the transmission of the one or more boot measurements to the one or more first software applications (320, 324).

7. The circuit of any of claims 1 to 6, wherein the secure element (304) is adapted to cryptographically sign the one or more data values and to provide the cryptographically signed data values to a requesting element.

8. The circuit of claim 7, wherein the secure element (208, 210) comprises a memory storing a third software application (314) executable by the second processing device for cryptographically signing the one or more data values.

9. The circuit of any of claims 1 to 8, adapted to authorize or refuse one or more transactions based on said one or more data values.

10. A smartphone comprising the circuit of any of claims 1 to 9.

11. A method of verifying the integrity of a boot sequence comprising:
implementing a boot sequence by a first processing device (203);
storing, in one or more first platform configuration registers (306) of the first processing device, one or more data values based on boot measurements relating to the boot sequence;
transferring one or more data values from the one or more first platform configuration registers (306) to one or more second platform configuration registers (308) of a secure element (304) having a second processing device, the first and second platform configuration registers being coupled together via a communications interface (310).

12. The method of claim 11, further comprising:
requesting, by a first software application (320, 324), the one or more data values;
cryptographically signing the one or more data values by the secure element; and
providing, by the secure element (304), the one or more cryptographically signed data values to the first software application (320, 324).
